# EUROPEAN PATENT APPLICATION

(11) **EP 4 814 144 A1**
(43) Date of publication of application: **30.09.2026**
(21) Application number: 25800848.1
(22) Date of filing: 07.07.2025
(51) Int. Cl.: C22B 23/00, C22B 3/44

(54) **IMPROVING METHOD FOR MAIN COMPONENT IN NICKEL-COBALT HYDROXIDE INTERMEDIATE PRODUCT**

(30) Priority: 10.02.2025 CN 202510145095
(71) Applicant: China Enfi Engineering Corporation, Beijing 100038 (CN); CHINA ENFI ENGINEERING CO., LTD., 100038 Beijing (CN)
(72) Inventor: SUN, Ninglei, Haidian District, Beijing 100038 (CN); DING, Jian, Haidian District, Beijing 100038 (CN); YIN, Shuyan, Haidian District, Beijing 100038 (CN); LI, Nuo, Haidian District, Beijing 100038 (CN); ZHANG, Yang, Haidian District, Beijing 100038 (CN); LIU, Zhen, Haidian District, Beijing 100038 (CN); FU, Junjian, Haidian District, Beijing 100038 (CN); LIU, Guo, Haidian District, Beijing 100038 (CN)
(74) Representative: Tiburzi, Andrea
(86) International application number: PCT/CN2025/107302
(87) International publication number: WO 2026/166047

(57) **Abstract**

The present disclosure provides a method for enhancing main components in a nickel-cobalt hydroxide intermediate product. The method includes: S100, performing a first activation on a nickel-cobalt hydroxide intermediate product slurry by using an alkaline substance to obtain a first activated product slurry; S200, adjusting a solid content of the first activated product slurry; S300, performing a second activation on the first activated product slurry by using a reducing agent to obtain a second activated product slurry; S400, adjusting a solid content of the second activated product slurry; and S500, adding the second activated product slurry to a nickel-cobalt-containing solution for performing a conversion reaction, to obtain nickel-cobalt hydroxide and a converted solution. The method of the present disclosure may significantly increase the total content of nickel and cobalt in nickel-cobalt hydroxide to a level exceeding 50%. It solves the problems of high content of impurities such as magnesium and manganese in the nickel-cobalt hydroxide intermediate product, high sulfate content, and thus increased subsequent refining production cost.

## Description

### Technical Field

### CROSS-REFERENCE TO RELATED APPLICATIONS

The present disclosure claims priority to Chinese Invention Patent Application No. 202510145095.4, filed to the Patent Office of the People's Republic of China on February 10, 2025, titled "Method for enhancing main components in nickel-cobalt hydroxide intermediate product", the entire contents of which are incorporated herein by reference.

### Technical Field

The present disclosure relates to the technical field of nickel cobalt hydrometallurgy, in particular, to a method for enhancing main components in a nickel-cobalt hydroxide intermediate product.

### Background Art

At present, high-pressure leaching hydrometallurgy of limonite-type laterite nickel ore is one of the main process methods of nickel metallurgy. The process flow of the method includes: leaching, removing iron and aluminum, and precipitating nickel and cobalt to obtain a nickel-cobalt hydroxide (MHP) intermediate product; subjecting the nickel-cobalt hydroxide intermediate product to an acid dissolution and impurities removal, and extracting and separating impurities and nickel-cobalt to obtain a final nickel-cobalt product.

The inventors of the present disclosure recognize that the above process method has the following problems: the contents of impurities such as magnesium and manganese in the product are relatively high, about 1% to 5% and 5% to 8%, the contents of nickel and cobalt are relatively low, about 35% to 41% and 1% to 2%, and at the same time, a large amount of basic sulfates is generated during the precipitation process, resulting in a relatively high content of sulfates and a relatively low content of nickel and cobalt, and the presence of impurities leads to an increase in subsequent refining production costs. Therefore, it is of great significance to provide an efficient processing method to solve the above problems.

In view of this, the present disclosure is proposed.

### Disclosure

In view of the above problems, an object of the present disclosure is to provide a method for enhancing main components in a nickel-cobalt hydroxide intermediate product, so as to solve the problems in the related art: high contents of impurities such as magnesium and manganese and a high content of sulfates in the nickel-cobalt hydroxide intermediate product, as well as the increase in subsequent refining production costs caused thereby.

In order to achieve the above object, according to an aspect of the present disclosure, a method for enhancing main components in a nickel-cobalt hydroxide intermediate product is provided, the nickel-cobalt hydroxide intermediate product including hydroxides of nickel ions, cobalt ions, manganese ions, and magnesium ions, and basic sulfates, and the enhancing method comprises: step S100, performing a first activation on a nickel-cobalt hydroxide intermediate product slurry by using an alkaline substance to obtain a first activated product slurry; step S200, adjusting a solid content of the first activated product slurry; step S300, performing a second activation on the first activated product slurry by using a reducing agent to obtain a second activated product slurry; step S400, performing a solid-liquid separation on the second activated product slurry to obtain a second activated product filter cake; and step S500, adding the second activated product filter cake to a nickel-cobalt-containing solution for performing a conversion reaction, to obtain nickel-cobalt hydroxide and a converted solution.

Among them, the optional technical solution is that, in the above step S100, the solid content of the nickel-cobalt hydroxide intermediate product slurry is 0.1% to 35%, preferably 5% to 20%.

Among them, the optional technical solution is that, in the above step S100, the nickel-cobalt hydroxide intermediate product slurry is obtained by a pretreatment of the nickel-cobalt hydroxide intermediate product, and the nickel-cobalt hydroxide intermediate product is a nickel-cobalt hydroxide paste or a nickel-cobalt hydroxide filter cake.

Among them, the optional technical solution is that, in the above step S100, in response to the nickel-cobalt hydroxide intermediate product is a nickel-cobalt hydroxide paste, the nickel-cobalt hydroxide paste is subjected to concentration treatment or dilution treatment to obtain the nickel-cobalt hydroxide intermediate product slurry; and in response to the nickel-cobalt hydroxide intermediate product is a nickel-cobalt hydroxide filter cake, the nickel-cobalt hydroxide filter cake is subjected to slurrying treatment to obtain the nickel-cobalt hydroxide intermediate product slurry.

Among them, the optional technical solution is that, in the above step S100, the alkaline substance is any one or more selected from the group consisting of sodium hydroxide, potassium hydroxide and ammonium hydroxide.

Among them, an optional technical solution is that, in the above step S100, a temperature for the first activation is 25°C to 260°C, preferably 80°C to 150°C, and a time for the first activation is 0.1 h to 10 h, preferably 2 h to 8 h.

Among them, an optional technical solution is that, in the above step S100, a mass of the alkaline substance is 0.05% to 20%, preferably 0.5% to 5% of a dry basis weight of the nickel-cobalt hydroxide intermediate product slurry.

Among them, an optional technical solution is that, in the above step S300, the reducing agent is any one or more selected from the group consisting of sodium sulfite, potassium sulfite, ammonium sulfite, sodium metabisulfite, potassium metabisulfite, ammonium metabisulfite and sulfur dioxide.

Among them, an optional technical solution is that, in the above step S300, a temperature for the second activation is 25°C to 260°C, preferably 80°C to 150°C, and a time for the second activation is 0.1 h to 10 h, preferably 2 h to 8 h.

Among them, an optional technical solution is that, in the above step S300, an amount of substance of sulfite groups derived from the reducing agent is 0.1 to 5 times, preferably 0.2 to 1.5 times an amount of substance of manganese ions in the nickel-cobalt hydroxide intermediate product slurry.

Among them, an optional technical solution is that, in the above step S200, a solid content of the first activated product slurry is 0.1% to 35%, preferably 5% to 20%; and the process of adjusting the solid content of the first activated product slurry comprises: performing a concentration treatment or a dilution treatment on the first activated product slurry; or sequentially performing a solid-liquid separation and a slurrying treatment on the first activated product slurry.

Among them, an optional technical solution is that, in the above step S500, a temperature for the conversion reaction is 25°C to 260°C, preferably 80°C to 150°C, a time for the conversion reaction is 0.1 h to 10 h, preferably 2 h to 8 h; and a liquid-solid ratio of the conversion reaction is 1 to 10:1, preferably 3 to 10:1.

Among them, an optional technical solution is that, in the above step S500, the nickel-cobalt hydroxide intermediate product is obtained by a precipitation method from a nickel-cobalt-containing solution, and the precipitation method is any one selected from the group consisting of a magnesium oxide precipitation method, a magnesium hydroxide precipitation method, a sodium-lithium hydroxide precipitation method, a potassium-lithium hydroxide precipitation method, a calcium oxide precipitation method and a calcium hydroxide precipitation method.

Among them, an optional technical solution is that, in the above step S500, the nickel-cobalt-containing solution comprises a post-leaching system of laterite nickel ore, and the post-leaching system of laterite nickel ore is any one or more selected from the group consisting of a post-leaching solution of laterite nickel ore with sulfuric acid, a post-leaching solution of laterite nickel ore with hydrochloric acid and a post-leaching solution of laterite nickel ore with nitric acid.

By applying the technical solutions of the present disclosure, the total content of nickel and cobalt in the nickel-cobalt hydroxide may be significantly improved to a level exceeding 50%, and the content of impurities such as magnesium and manganese is effectively reduced at the same time, and the product quality is optimized. The reduction in impurity content reduces the complexity and cost of subsequent refining and separation processes, increasing the economic benefit of the overall hydrometallurgy process. The method of the present disclosure may effectively decompose the basic sulfate in the product, reduce the content of sulfates, avoid the negative impact of sulfates on downstream processes, such as equipment corrosion, etc. The method of the present disclosure has good applicability to different precipitation methods and different systems, and enhances the flexibility and adaptability of the process. Therefore, by the method of the present disclosure, the content of nickel and cobalt in the product may be improved, and the impurity content may be reduced; the subsequent treatment cost is reduced; the sulfate problem is improved; the flexibility is high, the applicability is strong, and the economic benefits and environmental friendliness of the hydrometallurgy process are improved as a whole.

To the accomplishment of the foregoing and related objects, the one or more aspects of the present disclosure comprise features those will be described in detail later and specifically pointed out in the claims. The following description and the attached drawings set forth in detail certain illustrative aspects of the disclosure. However, these aspects are indicative of but a few of the various ways in which the principles of the disclosure may be employed. Also, the present disclosure is intended to include all such aspects and their equivalents.

### Brief Description of Drawings

By referring to the following description in conjunction with the accompanying drawings and the contents of the claims, and with a more comprehensive understanding of this disclosure, other objects and results of the present disclosure will become more apparent and readily appreciated. The drawings accompanying the description, which constitute a part of the present disclosure, are used to provide a further understanding of the present disclosure, and the schematic embodiments of the present disclosure and the description thereof are used to explain the present disclosure and do not constitute improper limitations to the present disclosure. In the drawings:

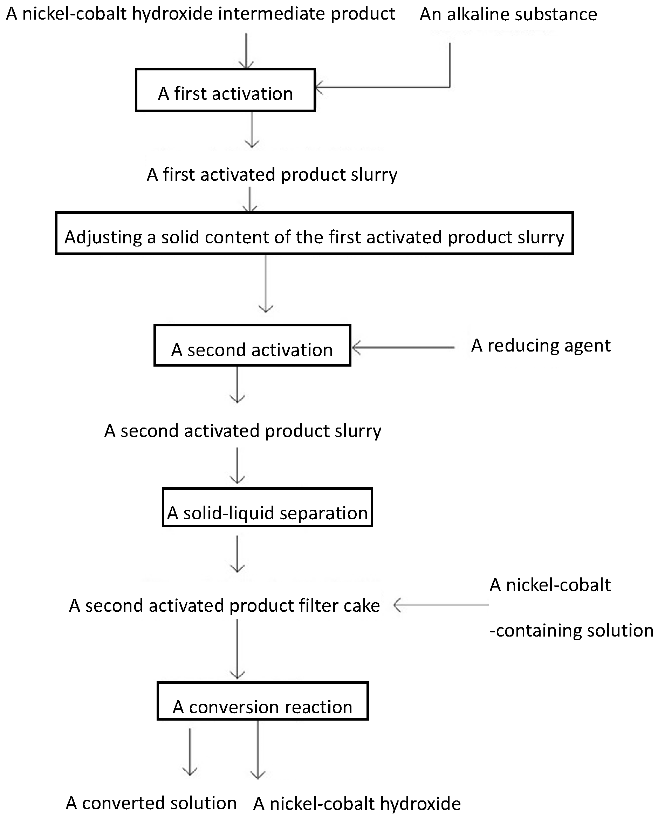

FIG. 1 shows a flowchart of a method for enhancing main components in a nickel-cobalt hydroxide intermediate product according to an embodiment of the present disclosure.

The same reference numerals indicate similar or corresponding features or functions throughout the drawings.

### Best Mode for Carrying out the Invention

In the following description, for purposes of explanation, numerous specific details are set forth in order to provide a thorough understanding of one or more embodiments. However, it is apparent that the embodiments in the present disclosure and the features in the embodiments may be combined with each other in the case of no conflict; or the embodiments may be implemented without these specific details. In other examples, well-known structures and devices are shown in block diagram form for ease of description of one or more embodiments.

Specific embodiments of the present disclosure will be described in detail below with reference to the accompanying drawings.

As described in the background art section, in the related art, in the nickel-cobalt hydroxide intermediate product, the content of impurities such as magnesium and manganese is relatively high, the content of sulfates is relatively high, and result in the subsequent refining production cost is increased, and in order to solve the technical problem, the present disclosure provides a method for enhancing main components in a nickel-cobalt hydroxide intermediate product.

In order to solve the above problems, the present disclosure provides a method for enhancing main components in a nickel-cobalt hydroxide intermediate product, the nickel-cobalt hydroxide intermediate product including hydroxides of nickel ions, cobalt ions, manganese ions, and magnesium ions, and basic sulfates, and the enhancing method comprises: step S100, performing a first activation on a nickel-cobalt hydroxide intermediate product slurry by using an alkaline substance to obtain a first activated product slurry; step S200, adjusting a solid content of the first activated product slurry; step S300, performing a second activation on the first activated product slurry by using a reducing agent to obtain a second activated product slurry; step S400, performing a solid-liquid separation on the second activated product slurry to obtain a second activated product filter cake; and step S500, adding the second activated product filter cake to a nickel-cobalt-containing solution for performing a conversion reaction, to obtain nickel-cobalt hydroxide and a converted solution.

Through the method of the present disclosure, the total content of nickel and cobalt in the nickel-cobalt hydroxide may be significantly improved to a level exceeding 50%, and the content of impurities such as magnesium and manganese is effectively reduced at the same time, and the product quality is optimized. The reduction in impurity content reduces the complexity and cost of subsequent refining and separation processes, increasing the economic benefit of the overall hydrometallurgy process. The method of the present disclosure may effectively decompose the basic sulfate in the product, reduce the content of sulfates, avoid the negative impact of sulfates on downstream processes, such as equipment corrosion, etc. The method of the present disclosure has good applicability to different precipitation methods and different systems, and enhances the flexibility and adaptability of the process. Therefore, by the method of the present disclosure, the content of nickel and cobalt in the product may be improved, and the impurity content may be reduced; the subsequent treatment cost is reduced; the sulfate problem is improved; the flexibility is high, the applicability is strong, and the economic benefits and environmental friendliness of the hydrometallurgy process are improved as a whole.

Specifically, the alkaline activation mechanism in the above step S100 may improve the reaction activity of certain impurities (such as magnesium hydroxide) in the nickel-cobalt hydroxide intermediate product, making it easier to undergo a replacement reaction with nickel-cobalt ions in the subsequent conversion process. In the step S200 and step S400, the importance of performing solid content adjustment and solid-liquid separation: the solid content of the slurry directly affects the efficiency and required energy of subsequent reactions. Appropriate concentrations of slurry may maximize the reaction contact area, accelerate the reaction rate, while reducing processing energy consumption. In the step S300, the reductive activation mechanism: the addition of the reducing agent plays a role of reducing the high-valence manganese, converts it into a low-valence manganese hydroxide, thereby enhancing the reaction activity of manganese and facilitating the replacement reaction with nickel-cobalt ions. Principle of the conversion reaction in the step S500: the conversion reaction performed in the nickel-cobalt-containing solution is essentially to use the activated nickel-cobalt hydroxide intermediate product to perform a replacement reaction with nickel-cobalt ions in the nickel-cobalt-containing solution to finally generate nickel-cobalt hydroxide of higher purity, and at the same time, impurity ions are released into the solution, which is convenient for subsequent separation and treatment.

In addition, the synergistic effect of the first alkaline activation and the second reductive activation steps mentioned above may specifically treat the main impurities in the nickel-cobalt hydroxide intermediate product, such as magnesium hydroxide and high-valence manganese, and by changing the chemical forms thereof, making them easy to be replaced by nickel-cobalt ions in subsequent conversion reactions, thereby improving the purity of the product. The sequence of the first alkaline activation and the second reductive activation steps helps to further ensure that the manganese in the second activated product slurry is divalent manganese, thereby ensuring the efficiency and effect of the conversion reaction.

In a preferred embodiment, in order to enhance the activity of magnesium hydroxide and manganese hydroxide in the conversion reaction and reduce the risk of oxidation after long standing, the second activated product filter cake is returned to the aforementioned conversion reaction within 10 minutes, more preferably within 3 minutes.

Adjustment of solid content is critical to increase the reaction efficiency of the activation and conversion reaction process. Too low solid content tends to reduce the concentration of alkaline substance in the nickel-cobalt hydroxide intermediate product slurry and affects the reaction rate. Excessively high solid content may reduce the reaction efficiency due to an increase in system viscosity. Therefore, based on enhancing the purity and reaction efficiency of the finally obtained nickel-cobalt hydroxide product, in some preferred embodiments of the present disclosure, in the above step S100, the solid content of the nickel-cobalt hydroxide intermediate product slurry is 0.1% to 35%, preferably 5% to 20%, which is more conducive to enhancing the efficiency of the activation and conversion reaction, promoting the replacement reaction of nickel-cobalt ions and impurity ions, and reducing energy consumption and processing cost. The solid content of the nickel-cobalt hydroxide intermediate product slurry may be 0.1%, 0.3%, 0.5%, 1%, 1.2%, 1.5%, 2%, 2.5%, 3%, 3.5%, 4%, 5%, 10%, 15%, 20%, 25%, 30%, or 35%, but it is certainly not limited to any one value of 0.1% to 35%.

In some embodiments of the present disclosure, in the above step S100, the nickel-cobalt hydroxide intermediate product slurry is obtained by a pretreatment of the nickel-cobalt hydroxide intermediate product, and the nickel-cobalt hydroxide intermediate product is a nickel-cobalt hydroxide paste or a nickel-cobalt hydroxide filter cake.

The nickel-cobalt hydroxide intermediate product may have a wide range of sources, such as the nickel-cobalt hydroxide intermediate product obtained by the high-pressure leaching hydrometallurgy of laterite nickel ore may be a nickel-cobalt hydroxide paste or a nickel-cobalt hydroxide filter cake, and this type of nickel-cobalt hydroxide undergoes some pretreatment to obtain a nickel-cobalt hydroxide intermediate product slurry suitable for the step S100, thereby facilitating subsequent activation processing thereof.

In some embodiments of the present disclosure, in the above step S100, in response to the nickel-cobalt hydroxide intermediate product is a nickel-cobalt hydroxide paste, the nickel-cobalt hydroxide paste is subjected to concentration treatment or dilution treatment to obtain the nickel-cobalt hydroxide intermediate product slurry; and in response to the nickel-cobalt hydroxide intermediate product is a nickel-cobalt hydroxide filter cake, the nickel-cobalt hydroxide filter cake is subjected to slurrying treatment to obtain the nickel-cobalt hydroxide intermediate product slurry.

By using the nickel-cobalt hydroxide paste or the nickel-cobalt hydroxide filter cake as a raw material, the uniformity and reaction contact area of the nickel-cobalt hydroxide intermediate product slurry are improved by slurrying, concentration or dilution treatment, thereby facilitating the smooth progress of subsequent activation and conversion reaction processes.

In some embodiments of the present disclosure, in the above step S100, the alkaline substance is any one or more selected from the group consisting of sodium hydroxide, potassium hydroxide and ammonium hydroxide.

The use of alkaline substances such as sodium hydroxide, potassium hydroxide or ammonium hydroxide for activation helps to improve the reaction activity of magnesium hydroxide in the nickel-cobalt hydroxide intermediate product, accelerate the replacement reaction between magnesium hydroxide and nickel-cobalt ions, and effectively reduce the magnesium content in the nickel-cobalt hydroxide product.

Performing the first activation under suitable temperature conditions helps to maximize the reaction efficiency of the first activation, in some embodiments of the present disclosure, preferably, in the step S100, the first activation temperature is 25°C to 260°C, preferably 80°C to 150°C, and the first activation time is 0.1 h to 10 h, preferably 2 h to 8 h, thereby not only helping reduce energy consumption, but also reducing occurrence of side reactions, and enhancing the purity and quality of the nickel-cobalt hydroxide product. Among them, the temperature for the first activation may be 25°C, 30°C, 35°C, 40°C, 45°C, 50°C, 55°C, 60°C, 65°C, 70°C, 75°C, 80°C, 85°C, 90°C, 95°C, 100°C, 120°C, 150°C, 180°C, 200°C, 230°C or 260°C, and it is certainly not limited to any one value of 25°C to 260°C. The time for the first activation may be 0.1 h, 1 h, 1.5 h, 2 h, 3 h, 4 h, 5 h, 6 h, 8 h, 9 h or 10 h, and it is certainly not limited to any one value of 0.1 h to 10 h.

The amount of the alkaline substance is crucial for the activation effect of the nickel-cobalt hydroxide intermediate product, the reasonable amount of the alkaline substance may help activate impurities without causing excessive alkaline environment, in some embodiments of the present disclosure, preferably, in the above step S100, the mass of the alkaline substance is 0.05% to 20%, preferably 0.5% to 5%, of the dry basis weight of the nickel-cobalt hydroxide intermediate product slurry, which is more conducive to enhancing the stability of the nickel-cobalt hydroxide product and the efficiency of subsequent treatment. Among them, the mass of the alkaline substance may be 0.05%, 0.1%, 0.3%, 0.5%, 1%, 1.2%, 1.5%, 2%, 2.5%, 3%, 3.5%, 4%, 5%, 10%, 15% or 20% of the dry basis weight of the nickel-cobalt hydroxide intermediate product slurry, and it is certainly not limited to any one value of 0.05% to 20%.

In some embodiments of the present disclosure, in the above step S300, the reducing agent is any one or more selected from the group consisting of sodium sulfite, potassium sulfite, ammonium sulfite, sodium metabisulfite, potassium metabisulfite, ammonium metabisulfite and sulfur dioxide.

The use of reducing agents such as sodium sulfite and potassium sulfite for the first activation effectively reduces the valence state of manganese in the nickel-cobalt hydroxide intermediate product, improves the reaction activity thereof, promotes the replacement reaction between manganese and nickel-cobalt ions, and reduces the manganese content in the finally obtained nickel-cobalt hydroxide product.

Performing the second activation under suitable temperature and time conditions helps to maximize the efficiency of the second activation, in some preferred embodiments of the present disclosure, in the above step S300, the second activation temperature is 25°C to 260°C, preferably 80°C to 150°C, and the second activation time is 0.1 h to 10 h, preferably 2 h to 8 h, thereby helping further reduce energy waste, while reducing the occurrence of side reactions and improving the purity and quality of the finally obtained nickel-cobalt hydroxide product. Among them, the temperature for the second activation may be 25°C, 30°C, 35°C, 40°C, 45°C, 50°C, 55°C, 60°C, 65°C, 70°C, 75°C, 80°C, 85°C, 90°C, 95°C, 100°C, 120°C, 150°C, 180°C, 200°C, 230°C or 260°C, and it is certainly not limited to any one value of 25°C to 260°C. The time for the second activation may be 0.1 h, 1 h, 1.5 h, 2 h, 3 h, 4 h, 5 h, 6 h, 8 h, 9 h or 10 h, and it is certainly not limited to any one value of 0.1 h to 10 h.

In some embodiments of the present disclosure, in the above step S300, an amount of substance of sulfite groups derived from the reducing agent is 0.1 to 5 times an amount of substance of manganese ions in the nickel-cobalt hydroxide intermediate product slurry.

The amount of substance of sulfite groups in the reducing agent is 0.1 to 5 times, preferably 0.2 to 1.5 times the amount of substance of manganese ions in the nickel-cobalt hydroxide intermediate product, this ratio is beneficial for improving the effective reduction effect of high-valence manganese, while reducing the risk of excessive addition of reducing agents and reducing the complexity of subsequent treatment. Among them, the amount of substance of sulfite groups in the reducing agent may be 0.1 times, 0.2 times, 0.3 times, 0.4 times, 0.5 times, 0.6 times, 0.7 times, 0.8 times, 0.9 times, 1 times, 1.1 times, 1.2 times, 1.3 times, 1.4 times, 1.5 times, 2 times, 2.3 times, 2.5 times, 2.8 times, 3 times, 3.5 times, 4 times, 4.5 times or 5 times the amount of substance of manganese ions in the nickel-cobalt hydroxide intermediate product, and it is certainly not limited to any one value of 0.1 to 5 times.

In some embodiments of the present disclosure, in the above step S200, a solid content of the first activated product slurry is 0.1% to 35%, preferably 5% to 20%; and the process of adjusting the solid content of the first activated product slurry comprises: performing a concentration treatment or a dilution treatment on the first activated product slurry; or sequentially performing a solid-liquid separation and a slurrying treatment on the first activated product slurry. Among them, the solid content of the first activated product slurry may be 0.1%, 0.3%, 0.5%, 1%, 1.2%, 1.5%, 2%, 2.5%, 3%, 3.5%, 4%, 5%, 10%, 15%, 20%, 25%, 30%, or 35%, but it is certainly not limited to any one value of 0.1% to 35%.

Regulation of the solid content of the first activated product slurry helps optimize the conditions of the second activation, thereby enhancing the efficiency of the second activation while reducing the energy consumption and enhancing the economics of the overall process.

Optimization of parameters such as temperature, time, and liquid-solid ratio of the conversion reaction helps to maximally promote the replacement reaction between nickel-cobalt ions and impurities, improve metal recovery rate, and reduce energy consumption and processing cost. Therefore, in some embodiments of the present disclosure, preferably, in the step S500, a temperature for the conversion reaction is 25°C to 260°C, preferably 80°C to 150°C, a time for the conversion reaction is 0.1 h to 10 h, preferably 2 h to 8 h; and a liquid-solid ratio of the conversion reaction is 1 to 10:1, preferably 3 to 10:1. Among them, the temperature for the conversion reaction may be 25°C, 30°C, 35°C, 40°C, 45°C, 50°C, 55°C, 60°C, 65°C, 70°C, 75°C, 80°C, 85°C, 90°C, 95°C, 100°C, 120°C, 150°C, 180°C, 200°C, 230°C or 260°C, and it is certainly not limited to any one value of 25°C to 260°C. The time for the conversion reaction may be 0.1 h, 1 h, 1.5 h, 2 h, 3 h, 4 h, 5 h, 6 h, 8 h, 9 h or 10 h, and it is certainly not limited to any one value of 0.1 h to 10 h. The liquid-solid ratio of the conversion reaction may be 1:1, 2:1, 3:1, 4:1, 5:1, 6:1, 7:1, 8:1, 9:1 or 10:1, and it is certainly not limited to any one value of 1 to 10:1.

In some embodiments of the present disclosure, in the above step S500, the nickel-cobalt hydroxide intermediate product is obtained by a precipitation method from a nickel-cobalt-containing solution, and the precipitation method is any one selected from the group consisting of a magnesium oxide precipitation method, a magnesium hydroxide precipitation method, a sodium-lithium hydroxide precipitation method, a potassium-lithium hydroxide precipitation method, a calcium oxide precipitation method and a calcium hydroxide precipitation method.

Different precipitation methods have an influence on the original composition of the nickel-cobalt hydroxide intermediate product, and the optimized above precipitation method is beneficial to provide a nickel-cobalt hydroxide intermediate product raw material more suitable for subsequent treatment, and improve the efficiency of the main components enhancement method in the entire nickel-cobalt hydroxide intermediate product.

Different leaching systems (sulfuric acid, hydrochloric acid, nitric acid) may affect the solubility and chemical morphology of impurities in nickel-cobalt hydroxide. Selecting a suitable leaching system helps to further optimize the separation of impurities and improve the recovery efficiency of nickel and cobalt. In some embodiments of the present disclosure, preferably, in the above step S500, the nickel-cobalt-containing solution comprises a post-leaching system of laterite nickel ore, and the post-leaching system of laterite nickel ore is any one or more selected from the group consisting of a post-leaching solution of laterite nickel ore with sulfuric acid, a post-leaching solution of laterite nickel ore with hydrochloric acid and a post-leaching solution of laterite nickel ore with nitric acid, thereby facilitating further promotion of impurity separation and improving the recovery rate of nickel and cobalt.

In addition, it is preferred that the use object of the above-mentioned method for enhancing main components in a nickel-cobalt hydroxide intermediate product of the present disclosure is a nickel-cobalt hydroxide intermediate product obtained by precipitation of the post-leaching solution of laterite nickel ore with sulfuric acid, the nickel-cobalt hydroxide intermediate product has a nickel content of 35% to 41%, a cobalt content of 3% to 4%, a magnesium content of 1% to 5%, a manganese content of 5% to 8%, and a sulfate content of 4% to 5%, and through the above method for enhancing main components in a nickel-cobalt hydroxide intermediate product, the finally obtained nickel-cobalt hydroxide product has a nickel content of 45% to 50%, a cobalt content of 3% to 5%, a magnesium content of 0.05% to 1%, a manganese content of 0.5% to 2%, and a sulfate content of 0.5% to 1.5%.

Preferably, the nickel-cobalt-containing solution is a nickel-cobalt hydroxide intermediate product recovered by precipitation of iron-aluminum-removed solution in hydro metallurgy process of laterite nickel ore and a nickel-cobalt sulfate solution, wherein the content of Ni²⁺ is 2 to 6 g/L, the content of Co²⁺ is 0.1 to 0.5 g/L, the content of Mg²⁺ is 2 to 10 g/L, and the content of Mn²⁺ is 1 to 5 g/L.

The present disclosure is further described in detail below with reference to specific examples, and these examples should not be construed as limiting the claimed scope of the present disclosure.

The object treated in the following examples is a nickel-cobalt hydroxide intermediate product recovered by precipitation of iron-aluminum-removed solution in hydrometallurgy process of laterite nickel ore and a nickel-cobalt sulfate solution, wherein the ionic components in the nickel-cobalt sulfate solution are as follows:

| Cationic species | Ni²⁺ | Co²⁺ | Mg²⁺ | Mn²⁺ |
|---|---|---|---|---|
| Mass concentration | 2~6g/L | 0.1~0.5% | 2~10g/L | 1~5g/L |

### Example 1

A method for enhancing main components in a nickel-cobalt hydroxide intermediate product recovered by precipitation of iron-aluminum-removed solution in hydrometallurgy process of laterite nickel ore:
Referring to the flowchart of a method for enhancing main components in the nickel-cobalt hydroxide intermediate product shown in FIG. 1, the nickel-cobalt hydroxide intermediate product filter cake obtained by precipitation of the sulfate system has a nickel content of 39%, a cobalt content of 3%, a magnesium content of 2%, a manganese content of 7%, and a sulfate content of 4%; and the nickel-cobalt hydroxide intermediate product filter cake is slurried with water until the solid content is 20%, so as to obtain a nickel-cobalt hydroxide intermediate product slurry. The sodium hydroxide is added to the nickel-cobalt hydroxide intermediate product slurry for the first activation, in which the mass of the sodium hydroxide is 2% of the dry basis weight of the nickel-cobalt hydroxide intermediate product slurry, the temperature for the first activation is 150°C, and the time is 2 h, so as to obtain a first activated product slurry; and subsequently, the first activated product slurry is filtered and slurried again to a solid content of 20%.

Sodium sulfite is added to the first activated product slurry with a solid content of 20% for the second activation, an amount of substance of sulfite groups is 0.2 times an amount of substance of manganese ions in the nickel-cobalt hydroxide intermediate product slurry, the temperature for the second activation is 150°C, and the time is 2 h, to obtain the second activated product slurry, and then the second activated product slurry is filtered, and the obtained second activated product filter cake is added to the nickel-cobalt sulfate solution within 3 minutes to carry out the conversion reaction under the condition of the liquid-solid ratio 3:1 with the temperature for the conversion reaction of 150°C and the time of 2 h, and then a high-quality nickel-cobalt hydroxide product is obtained after filtering and washing, wherein the nickel content is 48%, the cobalt content is 4%, the magnesium content is 0.1%, the manganese content is 0.8%, and the sulfate content is 0.6%.

### Example 2

This example differs from example 1 only in that: the solid content of the nickel-cobalt hydroxide intermediate product slurry is 5%, and nickel-cobalt hydroxide is finally obtained; upon detection, the nickel content is 48.5%, the cobalt content is 4.5%, the magnesium content is 0.08%, the manganese content is 0.6%, and the sulfate content is 0.5%.

### Example 3

This example differs from example 1 only in that: the solid content of the nickel-cobalt hydroxide intermediate product slurry is 35%, and nickel-cobalt hydroxide is finally obtained; upon detection, the nickel content is 48.7%, the cobalt content is 3.5%, the magnesium content is 0.3%, the manganese content is 1.2%, and the sulfate content is 0.8%.

### Example 4

This example differs from example 1 only in that: the solid content of the nickel-cobalt hydroxide intermediate product slurry is 0.1%, and nickel-cobalt hydroxide is finally obtained; upon detection, the nickel content is 48%, the cobalt content is 4%, the magnesium content is 0.1%, the manganese content is 0.8%, and the sulfate content is 0.6%.

### Example 5

This example differs from example 1 only in that: ammonium hydroxide is added to the nickel-cobalt hydroxide intermediate product slurry for the first activation, and nickel-cobalt hydroxide is finally obtained; upon detection, the nickel content is 47.7%, the cobalt content is 3.8%, the magnesium content is 0.1%, the manganese content is 0.8%, and the sulfate content is 1.3%.

### Example 6

This example differs from example 1 only in that: the temperature for the first activation is 80°C, the time for the first activation is 8 h, and nickel-cobalt hydroxide is finally obtained; upon detection, the nickel content is 48.9%, the cobalt content is 3.7%, the magnesium content is 0.1%, the manganese content is 0.8%, and the sulfate content is 0.8%.

### Example 7

This example differs from example 1 only in that: the temperature for the first activation is 60°C, the time for the first activation is 10 h, and nickel-cobalt hydroxide is finally obtained; upon detection, the nickel content is 47.7%, the cobalt content is 3.7%, the magnesium content is 0.1%, the manganese content is 0.8%, and the sulfate content is 1.2%.

### Example 8

This example differs from example 1 only in that: the mass of sodium hydroxide is 5% of the dry basis weight of the nickel-cobalt hydroxide intermediate product slurry, and nickel-cobalt hydroxide is finally obtained; upon detection, the nickel content is 48.2%, the cobalt content is 4.3%, the magnesium content is 0.1%, the manganese content is 0.8%, and the sulfate content is 0.5%.

### Example 9

This example differs from example 1 only in that: the mass of sodium hydroxide is 0.4% of the dry basis weight of the nickel-cobalt hydroxide intermediate product slurry, and nickel-cobalt hydroxide is finally obtained; upon detection, the nickel content is 47.8%, the cobalt content is 3.8%, the magnesium content is 0.1%, the manganese content is 0.8%, and the sulfate content is 1.3%.

### Example 10

This example differs from example 1 only in that: the reducing agent is ammonium sulfite, and nickel-cobalt hydroxide is finally obtained; upon detection, the nickel content is 48.3%, the cobalt content is 4.1%, the magnesium content is 0.1%, the manganese content is 1.2%, and the sulfate content is 0.6%.

### Example 11

This example differs from example 1 only in that: the temperature for the second activation is 80°C, the time for the second activation is 8 h, and nickel-cobalt hydroxide is finally obtained; upon detection, the nickel content is 47.5%, the cobalt content is 3.9%, the magnesium content is 0.1%, the manganese content is 1.2%, and the sulfate content is 0.6%.

### Example 12

This example differs from example 1 only in that: the temperature for the second activation is 60°C, the time for the second activation is 10 h, and nickel-cobalt hydroxide is finally obtained; upon detection, the nickel content is 48.1%, the cobalt content is 3.7%, the magnesium content is 0.1%, the manganese content is 1.5%, and the sulfate content is 0.6%.

### Example 13

This example differs from example 1 only in that: an amount of substance of sulfite groups is 1.5 times an amount of substance of manganese ions in the nickel-cobalt hydroxide intermediate product slurry, and nickel-cobalt hydroxide is finally obtained; upon detection, the nickel content is 48.5%, the cobalt content is 4.6%, the magnesium content is 0.1%, the manganese content is 0.5%, and the sulfate content is 0.6%.

### Example 14

This example differs from example 1 only in that: an amount of substance of sulfite groups is 0.1 times an amount of substance of manganese ions in the nickel-cobalt hydroxide intermediate product slurry, and nickel-cobalt hydroxide is finally obtained; upon detection, the nickel content is 47.6%, the cobalt content is 3.8%, the magnesium content is 0.1%, the manganese content is 1.5%, and the sulfate content is 0.6%.

### Example 15

This example differs from example 1 only in that: the obtained second activated product filter cake is added to the nickel-cobalt sulfate solution within 10 min, and nickel-cobalt hydroxide is finally obtained; upon detection, the nickel content is 47.6%, the cobalt content is 3.8%, the magnesium content is 0.1%, the manganese content is 1.2%, and the sulfate content is 0.6%.

### Comparative Example 1

The nickel-cobalt hydroxide intermediate product filter cake obtained by precipitation in a sulfate system contains 39% of nickel, 3% of cobalt, 2% of magnesium, 7% of manganese and 4% of sulfate, and is slurried to the solid content is 20% with water to obtain a nickel-cobalt hydroxide intermediate product slurry. The sodium sulfite is added to the nickel-cobalt hydroxide intermediate product slurry for the first activation, in which the temperature for the first activation is 150°C, and the time is 2 h, so as to obtain a first activated product slurry; and subsequently, the first activated product slurry is filtered and slurried again to a solid content of 20%.

Sodium hydroxide is added to the first activated product slurry with a solid content of 20% for the second activation with the temperature for the second activation of 150°C and the time of 2 h, to obtain the second activated product slurry, and then the second activated product slurry is filtered, and the obtained filter cake is added to the nickel-cobalt sulfate solution containing 3 g/L of nickel and 0.3 g/L of cobalt to carry out the conversion reaction under the condition of the liquid-solid ratio of 3:1 with the temperature for the conversion reaction of 150°C and the time of 2 h, and then a high-quality nickel-cobalt hydroxide product is obtained after filtering and washing, wherein the nickel content is 45%, the cobalt content is 3%, the magnesium content is 0.1%, the manganese content is 4%, and the sulfate content is 0.6%.

It should be noted that, in example 4, the solid content of the nickel-cobalt hydroxide intermediate product slurry is 0.1%, which has little impact on the quality of the finally obtained nickel-cobalt hydroxide product, mainly results in an increase in the amount of water used, and corresponding wastewater post-treatment is relatively cumbersome, and the treatment time is relatively prolonged, which is not conducive to the reduction of cost.

From the above description, it can be seen that the above examples of the present disclosure achieve the following technical effects:
Through the method of the present disclosure, the total content of nickel and cobalt in the nickel-cobalt hydroxide may be significantly improved to a level exceeding 50%, and the content of impurities such as magnesium and manganese is effectively reduced at the same time, and the product quality is optimized. The reduction in impurity content reduces the complexity and cost of subsequent refining and separation processes, increasing the economic benefit of the overall hydrometallurgy process. The method of the present disclosure may effectively decompose the basic sulfate in the product, reduce the content of sulfates, avoid the negative impact of sulfates on downstream processes, such as equipment corrosion, etc. The method of the present disclosure has good applicability to different precipitation methods and different systems, and enhances the flexibility and adaptability of the process. Therefore, by the method of the present disclosure, the content of nickel and cobalt in the product may be improved, and the impurity content may be reduced; the subsequent treatment cost is reduced; the sulfate problem is improved; the flexibility is high, the applicability is strong, and the economic benefits and environmental friendliness of the hydrometallurgy process are improved as a whole.

The above is only the preferred embodiment of this disclosure and is not intended to limit this disclosure. For those skilled in the art, this disclosure may have various modifications and changes. Any modification, equivalent replacement, or improvement made without departing from the spirit and principle of the present disclosure should fall within the protection scope of the present disclosure.

## Claims

1. A method for enhancing main components in a nickel-cobalt hydroxide intermediate product, the nickel-cobalt hydroxide intermediate product including hydroxides and basic sulfates of nickel ions, cobalt ions, manganese ions, and magnesium ions, **characterized in that** the method includes:
S100, performing a first activation on a nickel-cobalt hydroxide intermediate product slurry by using an alkaline substance to obtain a first activated product slurry;
S200, adjusting a solid content of the first activated product slurry;
S300, performing a second activation on the first activated product slurry by using a reducing agent to obtain a second activated product slurry;
S400, performing a solid-liquid separation on the second activated product slurry to obtain a second activated product filter cake; and
S500, adding the second activated product filter cake to a nickel-cobalt-containing solution for performing a conversion reaction to obtain a nickel-cobalt hydroxide and a converted solution.

2. The method for enhancing main components in a nickel-cobalt hydroxide intermediate product according to claim 1, **characterized in that** in S100, the solid content of the nickel-cobalt hydroxide intermediate product slurry is 0.1% to 35%.

3. The method for enhancing main components in a nickel-cobalt hydroxide intermediate product according to claim 2, **characterized in that** in S100, the nickel-cobalt hydroxide intermediate product slurry is obtained by a pretreatment of the nickel-cobalt hydroxide intermediate product, and the nickel-cobalt hydroxide intermediate product is a nickel-cobalt hydroxide paste or a nickel-cobalt hydroxide filter cake.

4. The method for enhancing main components in a nickel-cobalt hydroxide intermediate product according to claim 3, **characterized in that** in S100, when the nickel-cobalt hydroxide intermediate product is a nickel-cobalt hydroxide paste, the nickel-cobalt hydroxide paste is subjected to a concentration treatment or a dilution treatment to obtain the nickel-cobalt hydroxide intermediate product slurry; and when the nickel-cobalt hydroxide intermediate product is a nickel-cobalt hydroxide filter cake, the nickel-cobalt hydroxide filter cake is subjected to a slurrying treatment to obtain the nickel-cobalt hydroxide intermediate product slurry.

5. The method for enhancing main components in a nickel-cobalt hydroxide intermediate product according to any one of claims 1 to 4, **characterized in that** in S100, the alkaline substance is any one or more selected from the group consisting of sodium hydroxide, potassium hydroxide and ammonium hydroxide.

6. The method for enhancing main components in a nickel-cobalt hydroxide intermediate product according to any one of claims 1 to 4, **characterized in that** in S100, the first activation is performed at a temperature of 25°C to 260°C for a period of 0.1 h to 10 h.

7. The method for enhancing main components in a nickel-cobalt hydroxide intermediate product according to any one of claims 1 to 4, **characterized in that** in S100, a mass of the alkaline substance is 0.05% to 20% of a dry basis weight of the nickel-cobalt hydroxide intermediate product slurry.

8. The method for enhancing main components in a nickel-cobalt hydroxide intermediate product according to any one of claims 1 to 4, **characterized in that** in S300, the reducing agent is any one or more selected from the group consisting of sodium sulfite, potassium sulfite, ammonium sulfite, sodium metabisulfite, potassium metabisulfite, ammonium metabisulfite and sulfur dioxide.

9. The method for enhancing main components in a nickel-cobalt hydroxide intermediate product according to any one of claims 1 to 4, **characterized in that** in S300, the second activation is performed at a temperature of 25°C to 260°C for a period of 0.1 h to 10 h.

10. The method for enhancing main components in a nickel-cobalt hydroxide intermediate product according to any one of claims 1 to 4, **characterized in that** in S300, an amount of substance of sulfite groups derived from the reducing agent is 0.1 to 5 times an amount of substance of manganese ions in the nickel-cobalt hydroxide intermediate product slurry.

11. The method for enhancing main components in a nickel-cobalt hydroxide intermediate product according to any one of claims 1 to 4, **characterized in that** in S200, a solid content of the first activated product slurry is 0.1% to 35%; and the process of adjusting the solid content of the first activated product slurry comprises:
performing a concentration treatment or a dilution treatment on the first activated product slurry; or
sequentially performing a solid-liquid separation and a slurrying treatment on the first activated product slurry.

12. The method for enhancing main components in a nickel-cobalt hydroxide intermediate product according to any one of claims 1 to 4, **characterized in that** in S500, the conversion reaction is performed at a temperature of 25°C to 260°C for a period of 0.1 h to 10 h; and the conversion reaction is conducted at a liquid-solid ratio of 1 to 10:1.

13. The method for enhancing main components in a nickel-cobalt hydroxide intermediate product according to any one of claims 1 to 4, **characterized in that** in S500, the nickel-cobalt hydroxide intermediate product is obtained by a precipitation method from a nickel-cobalt-containing solution, and the precipitation method is any one selected from the group consisting of a magnesium oxide precipitation method, a magnesium hydroxide precipitation method, a sodium-lithium hydroxide precipitation method, a potassium-lithium hydroxide precipitation method, a calcium oxide precipitation method and a calcium hydroxide precipitation method.

14. The method for enhancing main components in a nickel-cobalt hydroxide intermediate product according to claim 13, **characterized in that** in S500, the nickel-cobalt-containing solution comprises a post-leaching system of laterite nickel ore, and the post-leaching system of laterite nickel ore is any one or more selected from the group consisting of a post-leaching solution of laterite nickel ore with sulfuric acid, a post-leaching solution of laterite nickel ore with hydrochloric acid and a post-leaching solution of laterite nickel ore with nitric acid.
